# EUROPEAN PATENT APPLICATION

(11) **EP 4 794 222 A1**
(43) Date of publication of application: **19.08.2026**
(21) Application number: 24884358.3
(22) Date of filing: 30.09.2024
(51) Int. Cl.: H04B 7/185

(54) **COMMUNICATION METHOD AND APPARATUS**

(30) Priority: 30.10.2023 CN 202311428317
(71) Applicant: HUAWEI TECHNOLOGIES CO., LTD., Shenzhen, Guangdong 518129 (CN)
(72) Inventor: YU, Tong, Shenzhen, Guangdong 518129 (CN); ZHANG, Xiaoyu, Shenzhen, Guangdong 518129 (CN); YANG, Liu, Shenzhen, Guangdong 518129 (CN); LIAO, Shuri, Shenzhen, Guangdong 518129 (CN); DOU, Shengyue, Shenzhen, Guangdong 518129 (CN)
(74) Representative: Pfenning, Meinig & Partner mbB
(86) International application number: PCT/CN2024/122837
(87) International publication number: WO 2025/092353

(57) **Abstract**

This application discloses a communication method and apparatus. The method includes: A terminal receives resource configuration information and first information from a first satellite, where the resource configuration information is used to configure an uplink resource, and the first information is used to determine whether the terminal is located within a first area. When the terminal enters a coverage area of a second satellite, it may send an RRC request to the second satellite through the uplink resource if the terminal is located within the first area. According to the method, the terminal can send, based on the uplink resource configured by the resource configuration information, an RRC request to the second satellite immediately when it enters the coverage area of the second satellite, without the need to send a random access signal or wait for an RAR. This reduces communication delay for terminals during cross-satellite access, and prevents or mitigates network congestion caused by simultaneous random access attempts from a large quantity of terminals, thereby improving access efficiency.

## Description

### CROSS-REFERENCE TO RELATED APPLICATIONS

This application claims priority to Chinese Patent Application No. 202311428317.0, filed with the China National Intellectual Property Administration on October 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a non-terrestrial network (non-terrestrial network, NTN), as satellites move, the satellite that can provide a service for a terminal may change. For example, in a time period 1, a satellite 1 can provide a service for a terminal 1 to a terminal M; and in a time period 2, a satellite 2 can provide a service for the terminal 1 to the terminal M, where M is a positive integer. If coverage areas of the satellite 1 and the satellite 2 are discontinuous, the time period 1 and the time period 2 are also discontinuous. In this way, no satellite provides a service for the terminal 1 to the terminal M between the end of the time period 1 and the start of the time period 2. After the terminal 1 to the terminal M enter the coverage area of the satellite 2, a plurality of terminals among the terminal 1 to the terminal M may need to re-initiate a random access procedure, introducing communication delay.

### SUMMARY

This application provides a communication method and apparatus to improve random access efficiency and reduce communication delay for terminals during cross-satellite access.

**According to a first aspect**, an embodiment of this application provides a communication method. The method may be applied to a first apparatus, and the first apparatus may be a terminal or a module (for example, a circuit, a chip, a chip system, or a processor) in the terminal, or may be a logical node, a logical module, or software that can implement all or a part of functions of the terminal. The following uses an example in which the first apparatus is a terminal for description. The method may include: A terminal may receive resource configuration information and first information from a first satellite, where the resource configuration information is used to configure an uplink resource, and the first information is used to determine whether the terminal is located within a first area. After the terminal enters a coverage area of a second satellite, the terminal may send an RRC request to the second satellite through the uplink resource if it is determined, based on the first information, that the terminal is located within the first area.

According to the method, after the terminal enters the coverage area of the second satellite, the terminal may send the RRC request to the second satellite based on the uplink resource configured by the resource configuration information, to implement random access. In this method, the terminal does not need to send a random access signal or receive an RAR, thereby shortening a communication delay of the terminal during cross-satellite access, avoiding or relieving network congestion caused by simultaneous random access of a large quantity of terminals, and improving access efficiency.

In addition, after the terminal enters the coverage area of the second satellite, the terminal may determine, based on a location change of the terminal, whether to send the RRC request to the second satellite through the uplink resource configured by the resource configuration information. Specifically, only when the terminal is located within the first area, the terminal sends the RRC request to the second satellite through the uplink resource configured by the resource configuration information. In this way, the second satellite may direct an antenna of the second satellite to the terminal based on the first area, to receive the RRC request from the terminal, thereby avoiding or reducing an access failure caused by movement of the terminal, shortening a communication delay of the terminal during cross-satellite access, avoiding or relieving network congestion caused by simultaneous random access of a large quantity of terminals, and improving access efficiency.

In a possible design, the first information may indicate a distance threshold. If a distance between a first location and a second location is less than the distance threshold, the terminal is located within the first area; and/or if the distance between the first location and the second location is greater than or equal to the distance threshold, the terminal is located outside the first area. The first location is a location of the terminal when leaving a coverage area of the first satellite, and the second location is a location of the terminal when entering the coverage area of the second satellite. In this design, the first information may indicate the distance threshold. In this way, the terminal can quickly and accurately determine, based on the first information, whether the terminal is located within the first area. In addition, in this design, the first information only needs to indicate the distance threshold, and overheads are low.

In a possible design, after the terminal enters the coverage area of the second satellite, the terminal sends a random access signal to the second satellite if it is determined, based on the first information, that the terminal is located outside the first area. In this design, after the terminal enters the coverage area of the second satellite, the terminal may determine, based on the location change of the terminal, whether to send the RRC request to the second satellite through the uplink resource configured by the resource configuration information. When the terminal is located outside the first area, the terminal cannot send the RRC request to the second satellite through the uplink resource configured by the resource configuration information, and may directly send the random access signal to the second satellite, thereby avoiding or reducing an access failure caused by movement of the terminal, shortening a communication delay of the terminal during cross-satellite access, and improving access efficiency.

In a possible design, the terminal may send the random access signal to the second satellite at a first time instant, where the first time instant is determined based on an identifier of the terminal and a time-frequency resource allocated by the second satellite for a preamble. Because the first time instant is related to the identifier of the terminal, and identifiers of different terminals are different, first time instants determined by the different terminals may also be different, thereby avoiding or relieving network congestion caused by simultaneous random access of a large quantity of terminals, and improving access efficiency.

In a possible design, the first time instant is determined based on the identifier of the terminal, second information, and the time-frequency resource allocated by the second satellite for the preamble. The second information includes at least one of the following: a quantity of terminal groups, a first duration, or a coefficient related to the first duration. In this design, the terminal can quickly and accurately determine the first time instant.

In a possible design, the terminal may further receive the second information from the first satellite or the second satellite. In this design, the terminal can quickly and accurately obtain the second information. In addition, because the second information is received by the terminal in real time, a network side may configure appropriate second information for the terminal, thereby improving configuration flexibility.

In a possible design, a time interval between the first time instant and a second time instant satisfies the following formula: $\left(UE_ID mod N\right) ∗ \left(delayTimer∗{T}_{delay}\right)$

UE_ID is the identifier of the terminal, N is the quantity of terminal groups, mod represents a modulo operation, T_{delay} is the first duration, delayTimer is the coefficient related to the first duration, and the second time instant is a time instant that is determined based on the time-frequency resource allocated by the second satellite for the preamble and at which the terminal sends the random access signal. In this design, terminals may be grouped into N terminal groups based on identifiers of the terminals. Terminals in different terminal groups send random access signals at different time instants, thereby avoiding or relieving network congestion caused by simultaneous random access of a large quantity of terminals, and improving access efficiency.

**According to a second aspect**, an embodiment of this application provides a communication method. The method may be applied to a second apparatus, and the second apparatus may be a first satellite or a module (for example, a circuit, a chip, a chip system, or a processor) in the first satellite, or may be a logical node, a logical module, or software that can implement all or a part of functions of the first satellite. The following uses an example in which the second apparatus is a first satellite for description. The method may include: The first satellite sends resource configuration information to a terminal, where the resource configuration information is used to configure an uplink resource; and the first satellite further sends first information to the terminal, so that the terminal, after entering a coverage area of the second satellite and determining, based on the first information, it is located within the first area, sends an RRC request to a second satellite based on the uplink resource.

In a possible design, the first information may indicate a distance threshold. If a distance between a first location and a second location is less than the distance threshold, the terminal is located within the first area; and/or if the distance between the first location and the second location is greater than or equal to the distance threshold, the terminal is located outside the first area. The first location is a location of the terminal when leaving a coverage area of the first satellite, and the second location is a location of the terminal when entering the coverage area of the second satellite.

In a possible design, the first satellite may send second information to the terminal, where the second information, an identifier of the terminal, and a time-frequency resource allocated by the second satellite for a preamble may be used to determine a first time instant, the first time instant is a time instant at which the terminal sends a random access signal to the second satellite, and the random access signal is sent when the terminal is located outside the first area after the terminal enters the coverage area of the second satellite. Optionally, the second information includes at least one of the following: a quantity of terminal groups, a first duration, or a coefficient related to the first duration.

In a possible design, a time interval between the first time instant and a second time instant satisfies the following formula: $\left(UE_ID mod N\right) ∗ \left(delayTimer∗{T}_{delay}\right)$

UE_ID is the identifier of the terminal, N is the quantity of terminal groups, mod represents a modulo operation, T_{delay} is the first duration, delayTimer is the coefficient related to the first duration, and the second time instant is a time instant that is determined based on the time-frequency resource allocated by the second satellite for the preamble and at which the terminal sends the random access signal.

**According to a third aspect**, an embodiment of this application provides a communication method. The method may be applied to a first apparatus, and the first apparatus may be a terminal or a module (for example, a circuit, a chip, a chip system, or a processor) in the terminal, or may be a logical node, a logical module, or software that can implement all or a part of functions of the terminal. The following uses an example in which the first apparatus is a terminal for description. The method may include: The terminal generates a random access signal. After the terminal enters a coverage area of a second satellite, the terminal may send the random access signal to the second satellite at a first time instant. The first time instant is determined based on an identifier of the terminal and a time-frequency resource allocated by the second satellite for a preamble.

In this method, after the terminal enters the coverage area of the second satellite, the terminal may send the random access signal to the second satellite at the first time instant. Because the first time instant is related to the identifier of the terminal, and identifiers of different terminals are different, first time instants determined by the different terminals may also be different, thereby avoiding or relieving network congestion caused by simultaneous random access of a large quantity of terminals, and improving access efficiency.

In a possible design, the first time instant is determined based on the identifier of the terminal, second information, and the time-frequency resource allocated by the second satellite for the preamble. The second information includes at least one of the following: a quantity of terminal groups, a first duration, or a coefficient related to the first duration. In this design, the terminal can quickly and accurately determine the first time instant.

In a possible design, the terminal may receive the second information. In this design, the terminal can quickly and accurately obtain the second information. In addition, because the second information is received by the terminal in real time, a network side may configure appropriate second information for the terminal, thereby improving configuration flexibility.

In a possible design, a time interval between the first time instant and a second time instant satisfies the following formula: $\left(UE_ID mod N\right) ∗ \left(delayTimer∗{T}_{delay}\right)$

UE_ID is the identifier of the terminal, N is the quantity of terminal groups, mod represents a modulo operation, T_{delay} is the first duration, delayTimer is the coefficient related to the first duration, and the second time instant is a time instant that is determined based on the time-frequency resource allocated by the second satellite for the preamble and at which the terminal sends the random access signal. In this design, terminals may be grouped into N terminal groups based on identifiers of the terminals. Terminals in different terminal groups send random access signals at different time instants, thereby avoiding or relieving network congestion caused by simultaneous random access of a large quantity of terminals, and improving access efficiency.

**According to a fourth aspect**, an embodiment of this application provides a communication method. The method may be applied to a third apparatus, and the third apparatus may be a second satellite or a module (for example, a circuit, a chip, a chip system, or a processor) in the second satellite, or may be a logical node, a logical module, or software that can implement all or a part of functions of the second satellite. The following uses an example in which the first apparatus is a the second satellite for description. The method may include: The second satellite receives a random access signal sent by a terminal at a first time instant, where the first time instant is determined based on an identifier of the terminal and a time-frequency resource allocated by the second satellite for a preamble.

In a possible design, the first time instant is determined based on the identifier of the terminal, second information, and the time-frequency resource allocated by the second satellite for the preamble. The second information includes at least one of the following: a quantity of terminal groups, a first duration, or a coefficient related to the first duration.

In a possible design, the second satellite may send the second information to the terminal.

In a possible design, a time interval between the first time instant and a second time instant satisfies the following formula: $\left(UE_ID mod N\right) ∗ \left(delayTimer∗{T}_{delay}\right)$

UE_ID is the identifier of the terminal, N is the quantity of terminal groups, mod represents a modulo operation, T_{delay} is the first duration, delayTimer is the coefficient related to the first duration, and the second time instant is a time instant that is determined based on the time-frequency resource allocated by the second satellite for the preamble and at which the terminal sends the random access signal.

**According to a fifth aspect**, this application provides a communication apparatus. The communication apparatus may be a terminal or a module (for example, a circuit, a chip, a chip system, or a processor) in the terminal, or may be a logical node, a logical module, or software that can implement all or a part of functions of the terminal. The communication apparatus has a function of implementing the first aspect or the third aspect. For example, the communication apparatus includes a corresponding module, unit, or means for performing the operations in the first aspect or the third aspect. The module, unit, or means may be implemented by software, or may be implemented by hardware, or may be implemented by hardware executing corresponding software.

In a possible design, the communication apparatus includes a processing unit and an interface unit. The interface unit may be configured to receive and send a signal, to implement communication between the communication apparatus and another apparatus; and the processing unit may be configured to perform some internal operations of the communication apparatus. Functions performed by the processing unit and the interface unit may correspond to the operations in the first aspect or the third aspect.

In a possible design, the communication apparatus includes a processor, and the processor may be configured to be coupled to a memory. The memory may store a computer program or instructions necessary for implementing a function in the first aspect or the third aspect. The processor may execute the computer program or the instructions stored in the memory. When the computer program or the instructions are executed, the communication apparatus is caused to implement the method in any possible design of the first aspect or the third aspect.

In a possible design, the communication apparatus includes a processor and a memory. The memory may store a computer program or instructions necessary for implementing a function in the first aspect or the third aspect. The processor may execute the computer program or the instructions stored in the memory. When the computer program or the instructions are executed, the communication apparatus is caused to implement the method in any possible design of the first aspect or the third aspect.

In a possible design, the communication apparatus includes a processor and an interface circuit. The processor is configured to communicate with another apparatus through the interface circuit, and perform the method in any possible design of the first aspect or the third aspect.

**According to a sixth aspect**, this application provides a communication apparatus. The communication apparatus may be a satellite or a module (for example, a circuit, a chip, a chip system, or a processor) in the satellite, or may be a logical node, a logical module, or software that can implement all or a part of functions of the satellite. The communication apparatus has a function of implementing the second aspect or the fourth aspect. For example, the communication apparatus includes a corresponding module, unit, or means for performing the operations in the second aspect or the fourth aspect. The module, unit, or means may be implemented by software, or may be implemented by hardware, or may be implemented by hardware executing corresponding software.

In a possible design, the communication apparatus includes a processing unit and an interface unit. The interface unit may be configured to receive and send a signal, to implement communication between the communication apparatus and another apparatus; and the processing unit may be configured to perform some internal operations of the communication apparatus. Functions performed by the processing unit and the interface unit may correspond to the operations in the second aspect or the fourth aspect.

In a possible design, the communication apparatus includes a processor, and the processor may be configured to be coupled to a memory. The memory may store a computer program or instructions necessary for implementing a function in the second aspect or the fourth aspect. The processor may execute the computer program or the instructions stored in the memory. When the computer program or the instructions are executed, the communication apparatus is caused to implement the method in any possible design of the second aspect or the fourth aspect.

In a possible design, the communication apparatus includes a processor and a memory. The memory may store a computer program or instructions necessary for implementing a function in the second aspect or the fourth aspect. The processor may execute the computer program or the instructions stored in the memory. When the computer program or the instructions are executed, the communication apparatus is caused to implement the method in any possible design of the second aspect or the fourth aspect.

In a possible design, the communication apparatus includes a processor and an interface circuit. The processor is configured to communicate with another apparatus through the interface circuit, and perform the method in any possible design of the second aspect or the fourth aspect.

It may be understood that in the fifth aspect or the sixth aspect, the processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are arranged separately. In a specific implementation process, the memory and the processor may be integrated into one chip, or may be arranged on different chips. A type of the memory and an arrangement manner of the memory and the processor are not limited in embodiments of this application.

**According to a seventh aspect**, this application provides a communication system. The communication system may include the communication apparatus according to the fifth aspect and the communication apparatus according to the sixth aspect. For example, the communication system includes a terminal and a first satellite, where the terminal is configured to perform the communication method according to the first aspect, and the first satellite is configured to perform the communication method according to the second aspect. For another example, the communication system includes a terminal and a second satellite, where the terminal is configured to perform the communication method according to the third aspect, and the second satellite is configured to perform the communication method according to the fourth aspect.

**According to an eighth aspect**, this application provides a computer-readable storage medium. The computer storage medium stores a computer program or instructions, and when the computer program or the instructions are executed, the method in any possible design of any one of the first aspect to the fourth aspect is implemented.

**According to a ninth aspect**, this application provides a computer program product. The computer program product includes computer program code, and when the computer program code is run, the method in any possible design of any one of the first aspect to the fourth aspect is implemented.

**According to a tenth aspect**, this application provides a chip. The chip is configured to read a computer program stored in a memory, to perform the method in any possible design of any one of the first aspect to the fourth aspect.

For technical effects that can be achieved in any one of the second aspect, and the fourth aspect to the tenth aspect, refer to the descriptions of the technical effects that can be achieved in any possible design in any one of the first aspect or the third aspect. Repeated details are not described.

### BRIEF DESCRIPTION OF DRAWINGS

FIG. 1 is a diagram of an architecture of a first communication system according to this application;
FIG. 2 is a diagram of an architecture of a second communication system according to this application;
FIG. 3 is a diagram of an architecture of a third communication system according to this application;
FIG. 4 is a diagram of an architecture of a fourth communication system according to this application;
FIG. 5 is a diagram of an architecture of a fifth communication system according to this application;
FIG. 6 is a diagram of a discontinuous coverage scenario according to this application;
FIG. 7 is a flowchart of a communication method according to this application;
FIG. 8 is a flowchart of another communication method according to this application;
FIG. 9 is a diagram of a structure of a communication apparatus according to this application; and
FIG. 10 is a diagram of a structure of another communication apparatus according to this application.

### DESCRIPTION OF EMBODIMENTS

The following describes technical solutions in embodiments of this application with reference to accompanying drawings in embodiments of this application. The technical solutions in embodiments of this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system (for example, a long term evolution (long term evolution, LTE) system), a 5th generation (5th generation, 5G) mobile communication system (for example, an NR system), an NTN communication system, and a future evolved communication system (for example, a 6th generation (6th generation, 6G) mobile communication system). The communication systems may be used in a machine to machine (machine to machine, M2M) network, a machine type communication (machine type communication, MTC) network, or another network.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

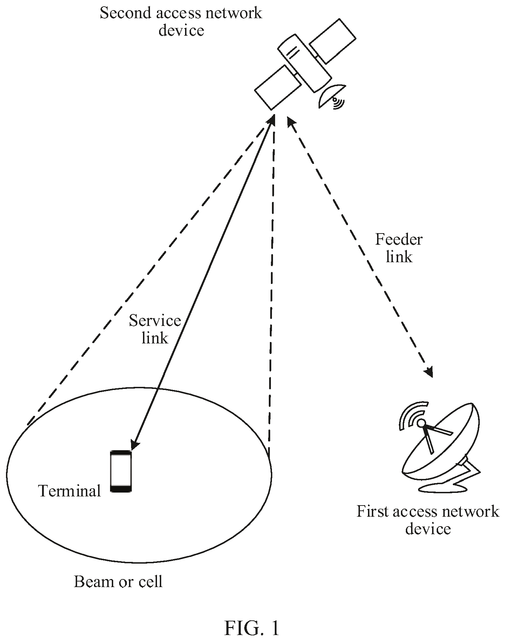

A method according to embodiments of this application may be applied to an NTN communication system. FIG. 1 shows an architecture of an NTN communication system to which an embodiment of this application is applicable. The communication system may include a terminal, a first access network device, and a second access network device. A communication link between the first access network device and the second access network device is a feedback link (or referred to as a feeder link), and a communication link between the second access network device and the terminal is a service link (service link).

The first access network device may be a gateway station (or referred to as a terrestrial station, an earth station, a signal gateway station, a gateway, or a gateway site) (gateway), or may be a base station.

The second access network device may be a satellite (or referred to as a satellite base station), a high altitude platform station (high altitude platform station, HAPS), or the like. The satellite may include at least one of the following: a geostationary earth orbit (geostationary earth orbit, GEO) satellite (or referred to as a geosynchronous orbit satellite) or a non-geostationary earth orbit (non-geostationary earth orbit, NGEO) satellite. The non-geostationary earth orbit satellite may include at least one of the following: a medium earth orbit (medium earth orbit, MEO) satellite or a low earth orbit (low earth orbit, LEO) satellite. This is not limited herein.

In this embodiment of this application, a communication mode of the second access network device may include a regenerative (regenerative) mode and a transparent (transparent) mode. When the communication mode of the second access network device is the regenerative mode, the second access network device may be used as a base station for wireless communication. For example, the second access network device may include a next generation NodeB (next generation NodeB, gNB), a distributed unit (distributed unit, DU), or the like. When the communication mode of the second access network device is the transparent mode, the second access network device may perform frequency conversion forwarding on a signal.

It should be understood that FIG. 1 shows only one first access network device and one second access network device. In actual use, an architecture of a plurality of first access network devices and/or one second access network device may be used as required. Each second access network device may provide a service for one or more terminals, each second access network device may correspond to one or more first access network devices, and each first access network device may correspond to one or more second access network devices. This is not specifically limited in this application.

In this application, the terminal (terminal) may also be referred to as user equipment (user equipment, UE), an access terminal, a subscriber unit (subscriber unit), a subscriber station, a mobile station, a mobile station (mobile station, MS), a remote station, a remote terminal, a mobile device, a user terminal, a terminal device (terminal equipment), a wireless communication device, a user agent, or a user apparatus.

The terminal may be a device that provides a wireless communication function, for example, a handheld device or a vehicle-mounted device having a wireless connection function. Currently, some examples of the terminal are: a mobile phone (mobile phone), a satellite mobile terminal, a cellular phone (cellular phone), a smartphone (smartphone), a tablet computer, a notebook computer, a palmtop, a mobile Internet device (mobile internet device, MID), a wearable device (for example, a smart watch, a smart band, a pedometer, and smart glasses), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control (industrial control), a wireless terminal in self-driving (self-driving), a wireless terminal in remote surgery (remote medical surgery), a wireless terminal in smart grid (smart grid), a wireless terminal in transportation safety (transportation safety), a wireless terminal in smart city (smart city), a wireless terminal in smart home (smart home) (for example, a refrigerator, a television, an air conditioner, or an electricity meter), a smart robot, a robotic arm, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a flight device (for example, a smart robot, a hot air balloon, an unmanned aerial vehicle, or an airplane), a terminal in a 5th generation (5th generation, 5G) network, a terminal in a future evolved public land mobile network (public land mobile network, PLMN), and the like. This is not limited in embodiments of this application. By way of example instead of limitation, in this embodiment of this application, the terminal may alternatively be a mobile terminal (mobile termination, MT) in an integrated access and backhaul (integrated access and backhaul, IAB) node. When facing a parent node of the IAB node, the IAB node may be considered as a terminal. In this case, the IAB node plays a role of an MT.

A device form of the terminal is not limited in embodiments of this application. An apparatus configured to implement a function of the terminal may be a terminal, or may be an apparatus, for example, a chip system, that can support the terminal in implementing the function. The apparatus may be installed in the terminal, or used in cooperation with the terminal. In embodiments of this application, the chip system may include a chip, or may include a chip and another discrete component.

In this application, an access network device is a device that provides a wireless communication function for a terminal, and the terminal may communicate with a core network device through the access network device. As a node in a radio access network, the access network device may also be referred to as a base station, a radio access network (radio access network, RAN) node (or device), or an access point (access point, AP). The communication system may include a plurality of access network devices, and the plurality of access network devices may be nodes of a same type, or may be nodes of different types. In some scenarios, roles of the access network device and the terminal are relative. For example, a network element #A may be a helicopter or an unmanned aerial vehicle, and may be configured as a mobile base station, and access a RAN through a network element #B. For a terminal that accesses the RAN through the network element #A, the network element #A is a base station. However, for the network element #B, the network element #A is a terminal.

In a possible scenario, the access network device may be a base station (base station), an evolved NodeB (evolved NodeB, eNodeB), a transmission reception point (transmission reception point, TRP), a transmission point (transmission point, TP), a gNB, a next-generation base station in a 6G mobile communication system, a base station in a future mobile communication system, a satellite, an access point (access point, AP) in a Wi-Fi system, an IAB node, a mobile switching center, an access network device in an NTN communication system, or the like. In other words, the access network device may be deployed on a high altitude platform or a satellite. The access network device may be a macro base station, a micro base station, an indoor base station, a relay node, a donor node, or a radio controller in a cloud RAN (cloud RAN, CRAN) scenario. Alternatively, the access network device may be a device that functions as a base station in device-to-device (device-to-device, D2D) communication, internet of vehicles communication, unmanned aerial vehicle communication, or machine communication. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of access network devices cooperate to assist the terminal in implementing radio access, and different access network devices respectively implement a part of functions of the base station. For example, the access network device may be a central unit (central unit, CU), a DU, a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including the CU node and the DU node. In addition, the CU may be classified as an access network device in an access network RAN, or the CU may be classified as an access network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented through a software module, a hardware module, or a combination of a software module and a hardware module.

In embodiments of this application, a form of the access network device is not limited. The access network device may be an apparatus configured to implement a function of the access network device, or may be an apparatus, for example, a chip system, that can support the access network device in implementing the function. The apparatus may be installed in the access network device, or used in cooperation with the access network device.

The access network device and the terminal may be located at fixed locations, or may be mobile. The access network device and the terminal may be deployed on land, including an indoor or outdoor device, or a handheld or vehicle-mounted device, or may be deployed on water, or may be deployed on an airplane, a balloon, or an artificial satellite in the air. Application scenarios of the access network device and the terminal are not limited in embodiments of this application.

In this application, the core network device is a network element included in a core network part in a mobile communication system. For example, the core network device is a network function (network function, NF) network element and a user plane function (user plane function, UPF) network element included in the core network part. The core network device can connect the terminal to different data networks, and perform services such as charging, mobility management, session management, and user plane forwarding. Currently, some examples of the NF network element are: a unified data management (unified data management, UDM) network element, a unified data repository (unified data repository, UDR) network element, a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, a network repository function (network repository function, NRF) network element, and the like.

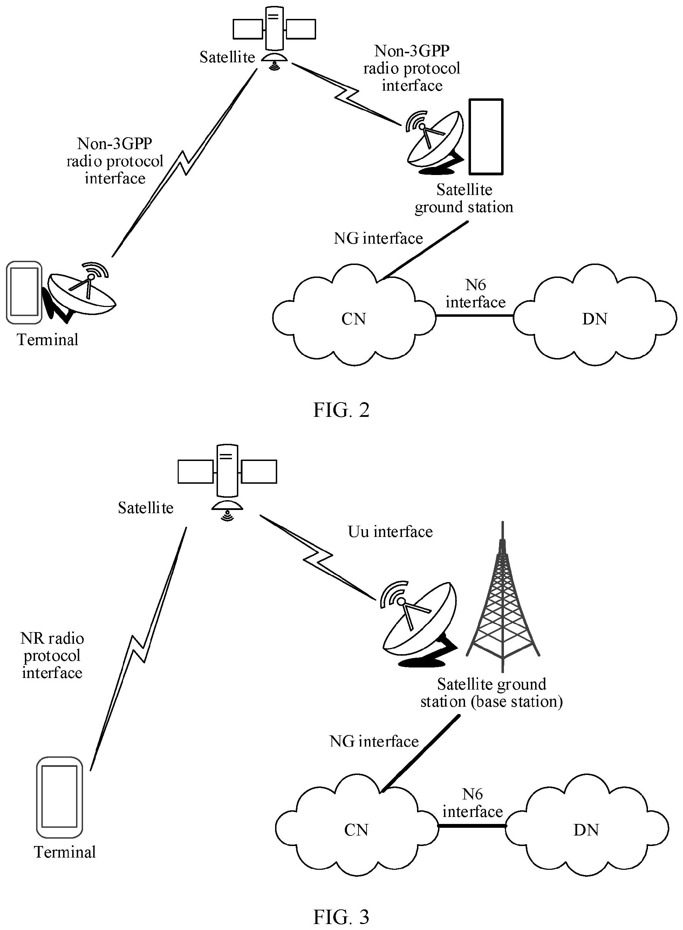

FIG. 2 shows a satellite communication system in a transparent mode to which an embodiment of this application is applicable. As shown in FIG. 2, a satellite may access a network through a non-3^{rd} generation partnership project (3^{rd} generation partnership project, 3GPP) radio protocol (non-3GPP radio protocol). The satellite may forward a signal between a terminal and a satellite ground station. Communication connections may be established between the terminal and the satellite, and between the satellite and the satellite ground station through a non-3GPP radio protocol interface. The satellite ground station may include an access point. The satellite ground station may communicate with a core network (core network, CN) through an NG interface (for example, an N2 interface and/or an N3 interface), and the CN may communicate with a data network (data network, DN) through an N6 interface.

FIG. 3 shows another satellite communication system in a transparent mode to which an embodiment of this application is applicable. As shown in FIG. 3, a satellite may access a network through an NR radio protocol. The satellite may forward a signal between a terminal and a satellite ground station. A Communication connection may be established between the terminal and the satellite through an NR radio protocol interface, and a communication connection may be established between the satellite and the satellite ground station through an NR radio protocol interface (for example, a Uu interface). The satellite ground station may be a base station. Interfaces between the satellite ground station and a CN, and between the CN and a DN are the same as those in FIG. 2. Details are not described herein.

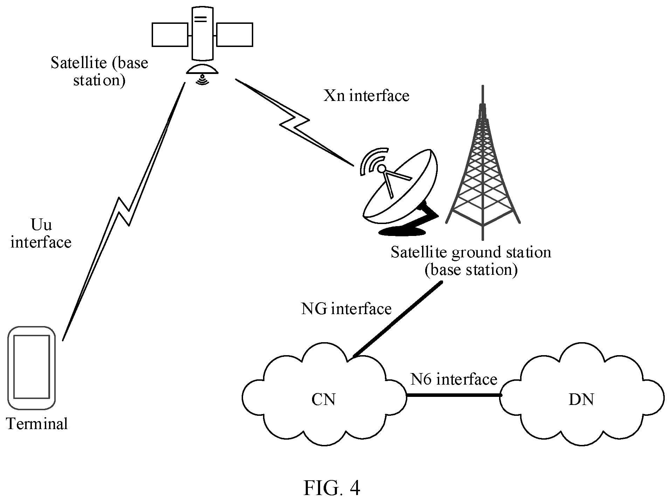

FIG. 4 shows a satellite communication system in a regenerative mode to which an embodiment of this application is applicable. As shown in FIG. 4, a satellite carries a base station, and a satellite ground station also carries a base station. A communication connection may be established between a terminal and the satellite through an NR radio protocol interface (for example, a Uu interface), and a communication connection may be established between the satellite and the satellite ground station through an NR radio protocol interface (for example, an Xn interface). Interfaces between the satellite ground station and a CN, and between the CN and a DN are the same as those in FIG. 2. Details are not described herein. Optionally, in the satellite communication system shown in FIG. 4, the satellite ground station may be a gateway, and does not include a base station.

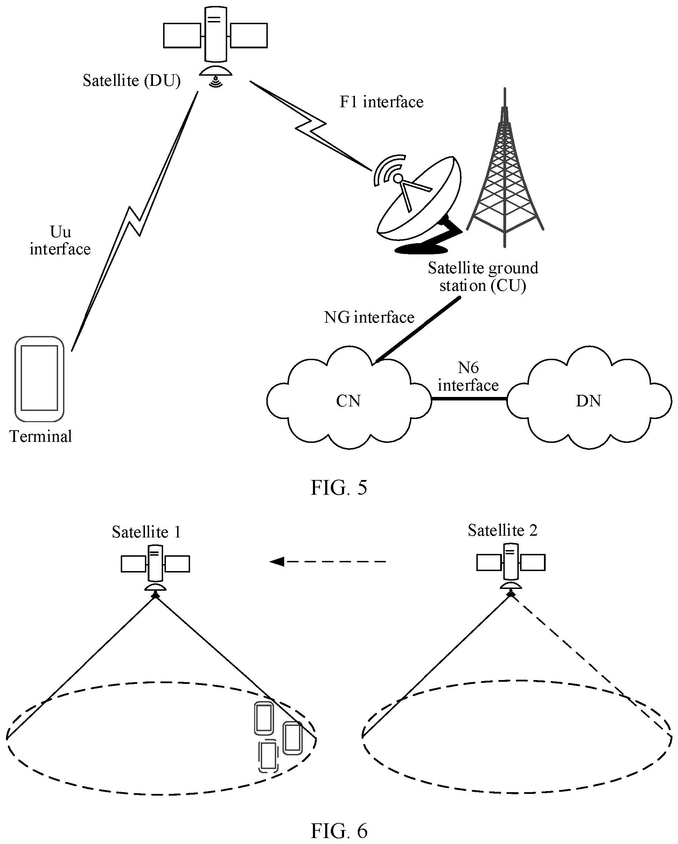

FIG. 5 shows another satellite communication system in a regenerative mode to which an embodiment of this application is applicable. As shown in FIG. 5, a satellite carries a DU, and a satellite ground station includes a CU. A communication connection may be established between a terminal and the satellite through an NR radio protocol interface (for example, a Uu interface), and a communication connection may be established between the satellite and the satellite ground station through an NR radio protocol interface (for example, an F1 interface). Interfaces between the satellite ground station and a CN, and between the CN and a DN are the same as those in FIG. 2. Details are not described herein.

The following first explains and describes related terms in embodiments of this application. It should be noted that these explanations are intended to make embodiments of this application easier to understand, but should not be considered as a limitation on the protection scope claimed in this application.

### (1) Random access:

The random access is a process that is initiated by a terminal to achieve uplink synchronization between the terminal and an access network device after the terminal and the access network device achieve downlink synchronization. The random access may be classified into contention-based (contention-based) random access and contention-free (contention-free) random access. Descriptions are separately provided below.

The contention-based random access may also be referred to as 4-step random access. In the contention-based random access, the terminal may send a random access signal to the access network device, where the random access signal includes a preamble (preamble). The access network device may detect the preamble, and estimate a delay from the terminal to the access network device based on the preamble, to determine a timing advance (timing advance, TA). The access network device sends a random access response (random access response, RAR) to the terminal, where the RAR includes the TA, a time-frequency resource location that is for uplink scheduling and that is configured by the access network device for the terminal, and the like. The terminal sends a radio resource control (radio resource control, RRC) request at the time-frequency resource location included in the RAR. The RRC request may also be referred to as a message 3 (message 3, Msg3). After receiving the RRC request, the access network device may send a contention resolution (contention resolution) message to the terminal, to complete the random access.

The contention-free random access may also be referred to as 2-step random access. In the contention-free random access, the terminal may send a preamble based on an indication of the preamble from the access network device. After receiving the preamble, the access network device sends an RAR to the terminal, to complete the random access.

**(2) Connected state**: The connected state may also be referred to as an RRC connected state. When a terminal device is in the connected state, there is an RRC connection between the terminal device and an access network device, and the terminal device and the access network device can communicate with each other through the RRC connection.

**(3) Resource**: In this application, the resource may include a time domain resource and/or a frequency domain resource. For example, the time domain resource may include a resource in a subframe, a slot, or a symbol, and the frequency domain resource may include a resource in a resource block (resource block, RB) or a resource block group (resource block group, RBG).

### (4) Discontinuous coverage:

In an NTN, to achieve continuous coverage, services may be provided by a plurality of satellites. Because a transmit period of a satellite is long, a part of areas may be in a discontinuous coverage state from time when the satellite transmits a service to time when continuous coverage networking is complete. For example, as shown in FIG. 6, in a time period 1, M terminals (such as a terminal 1 to a terminal M) are located within a coverage area of a satellite 1. In other words, in the time period 1, the satellite 1 can provide a service for the terminal 1 to the terminal M. As the satellite moves, the M terminals move out of the coverage area of the satellite 1. As a result, the terminals are not served. The M terminals can be served by a satellite 2 only when the satellite 2 moves over the M terminals, that is, the M terminals are located within a coverage area of the satellite 2.

After the M terminals enter the coverage area of the satellite 2, a plurality of terminals in the terminal 1 to the terminal M may have a network access requirement, so that a random access procedure needs to be re-initiated, causing a communication delay. In addition, after the M terminals enter the coverage area of the satellite 2, a large quantity of terminals may simultaneously initiate a random access procedure, causing network congestion.

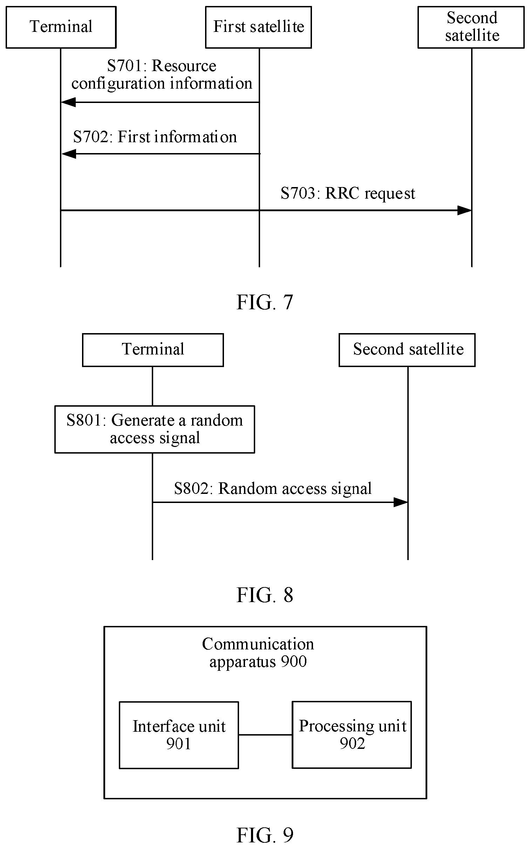

In view of this, embodiments of this application provide a communication method. FIG. 7 is a schematic flowchart corresponding to a communication method according to an embodiment of this application. As shown in FIG. 7, the method includes the following steps.

**S701**: A first satellite sends resource configuration information to a terminal, and the terminal receives the resource configuration information accordingly.

Optionally, when the terminal is about to leave a coverage area of the first satellite, the first satellite may send the resource configuration information to the terminal. For example, if the first satellite determines that the terminal will leave its coverage area after duration 1, the first satellite may send the resource configuration information to the terminal. The basis for the first satellite to determine that the terminal will leave its coverage area after the duration 1 may include one or more of the following: ephemeris of the first satellite, a moving speed of the terminal, and a moving direction of the terminal. The duration 1 may be preconfigured, for example, specified in a protocol, or may be determined by the first satellite, or may be determined by another device (for example, a core network device) and then notified to the first satellite.

The terminal may be a terminal in a connected state. In other words, an RRC connection exists between the terminal and the first satellite. In this way, the first satellite may send the resource configuration information to terminals in the connected state, without the need to send the resource configuration information to all terminals that are about to leave the coverage area of the first satellite, thereby reducing signaling overhead.

The resource configuration information may be used to configure an uplink resource. The uplink resource may be used by the terminal to send an RRC request to a second satellite after the terminal enters a coverage area of the second satellite. For example, the resource configuration information may include indication information of the uplink resource. For example, the indication information may include frequency domain offset information and time domain information. The frequency domain offset information indicates a frequency offset between the uplink resource and a center frequency, and the time domain information indicates a time domain location (for example, a start frame and/or a start symbol) of the uplink resource. The configuration information may be carried in a conventional message or in a new message. This is not limited in this application.

In some implementations, to enable the second satellite to receive the RRC request from the terminal through the uplink resource, the second satellite may be informed that the uplink resource is used by the terminal to send the RRC request to the second satellite after the terminal enters the coverage area of the second satellite. In some examples, after configuring the uplink resource for the terminal, the first satellite may notify the second satellite that the uplink resource is used by the terminal to send the RRC request to the second satellite after the terminal enters the coverage area of the second satellite. In some other examples, the uplink resource is a resource that is configured by the second satellite for the terminal to send the RRC request. After configuring the uplink resource, the second satellite notifies the first satellite of the uplink resource, and then the first satellite may perform step S701.

**S702**: The first satellite sends first information to the terminal; and correspondingly, the terminal receives the first information from the first satellite.

Optionally, when the terminal is about to leave the coverage area of the first satellite, the first satellite may send the first information to the terminal. For example, if the first satellite determines that the terminal leaves the coverage area of the first satellite after the duration 1, the first satellite may send the first information to the terminal. For specific content in which the first satellite determines that the terminal leaves the coverage area of the first satellite after the duration 1, refer to S701. Details are not described herein again.

The first information may be used to determine whether the terminal is located within a first area. In this way, after receiving the first information, the terminal may determine, based on the first information, whether the terminal is located within the first area. Specific content in which the first information is used to determine whether the terminal is located within the first area is described in the following manner a1 and manner a2. Details are not described herein. The first information may be carried in a conventional message, or may be carried in a new message. The first information and the resource configuration information may be carried in a same message, or may be carried in different messages. When the first information and the resource configuration information are carried in different messages, an execution sequence of S701 and S702 is not limited.

**S703**: After the terminal enters the coverage area of the second satellite, if the terminal is located within the first area, the terminal sends the RRC request to the second satellite through the uplink resource configured by the resource configuration information; and correspondingly, the second satellite receives the RRC request sent by the terminal through the uplink resource.

Optionally, after the terminal enters the coverage area of the second satellite, if the terminal has a network access requirement and the terminal is located within the first area, the terminal may send the RRC request to the second satellite through the uplink resource configured by the resource configuration information.

According to the method shown in FIG. 7, after the terminal enters the coverage area of the second satellite, the terminal may send the RRC request to the second satellite based on the uplink resource configured by the resource configuration information, to implement random access. In this method, the terminal does not need to send a random access signal or receive an RAR, thereby shortening a communication delay of the terminal during cross-satellite access, avoiding or relieving network congestion caused by simultaneous random access of a large quantity of terminals, and improving access efficiency.

In addition, in a discontinuous coverage scenario, a location of the terminal may change greatly from leaving the coverage area of the first satellite to entering the coverage area of the second satellite. In this way, when the terminal sends the RRC request through a reserved uplink resource, the second satellite may fail to receive the RRC request. For example, when the terminal leaves the coverage area of the first satellite, the terminal is located at an edge location of the coverage area of the first satellite. The first satellite configures the uplink resource for the terminal based on a location of the terminal when leaving the coverage area of the first satellite. When the second satellite moves over the terminal, the second satellite attempts, based on the location at which the terminal leaves the coverage area of the first satellite, to receive the RRC request from the terminal on the uplink resource configured for the terminal. If the location of the terminal changes greatly, an antenna of the second satellite cannot direct to the terminal. Specifically, because an antenna direction of the second satellite is directional, if the location of the terminal changes greatly, the terminal may be no longer located in a direction area of the antenna of the second satellite. Therefore, if the location of the terminal changes greatly, the second satellite may fail to receive the RRC request from the terminal, causing an access failure of the terminal.

According to the method shown in FIG. 7, after the terminal enters the coverage area of the second satellite, the terminal may determine, based on the location change of the terminal, whether to send the RRC request to the second satellite through the uplink resource configured by the resource configuration information. Specifically, only when the terminal is located within the first area, the terminal sends the RRC request to the second satellite through the uplink resource configured by the resource configuration information. In this way, the second satellite may direct the antenna of the second satellite to the terminal based on the first area, to receive the RRC request from the terminal, thereby avoiding or reducing an access failure caused by movement of the terminal, shortening a communication delay of the terminal during cross-satellite access, avoiding or relieving network congestion caused by simultaneous random access of a large quantity of terminals, and improving access efficiency.

As described above, the first information may be used to determine whether the terminal is located within the first area. There are a plurality of determining manners, for example, the manner a1 or the manner a2.

### Manner a1:

The first information may indicate a distance threshold. If a distance between a first location and a second location is less than the distance threshold, the terminal is located within the first area; and/or if the distance between the first location and the second location is greater than or equal to the distance threshold, the terminal is located outside the first area. In this way, after receiving the first information, the terminal may determine, based on the first information, whether the terminal is located within the first area.

In some possible manners, the first location is a location of the terminal when leaving the coverage area of the first satellite, and the second location is a location of the terminal when entering the coverage area of the second satellite. Optionally, in this manner, the terminal may, when entering the coverage area of the second satellite or within duration 2 after the terminal enters the coverage area of the second satellite, send the RRC request to the second satellite through the uplink resource configured by the resource configuration information. The duration 2 may be preconfigured, for example, specified in a protocol, or may be determined by the terminal, or may be determined by another device (for example, the first satellite or the second satellite) and then notified to the terminal.

In some other possible manners, the first location is a location of the terminal when leaving the coverage area of the first satellite, and the second location is a location of the terminal when determining to access the second satellite. Optionally, in this manner, the terminal may, when determining to access the second satellite or within duration 3 after determining to access the second satellite, send the RRC request to the second satellite through the uplink resource configured by the resource configuration information. The duration 3 may be preconfigured, for example, specified in a protocol, or may be determined by the terminal, or may be determined by another device (for example, the first satellite or the second satellite) and then notified to the terminal.

There are a plurality of manners in which the first information indicates the distance threshold. The following uses an example for description. In some examples, the first information may include the distance threshold. For example, the first information includes 50 meters, indicating that the distance threshold is 50 meters. In some other examples, there is a correspondence between the first information and the distance threshold. For example, a correspondence between at least one candidate distance threshold and at least one index is shown in Table 1. If the first information includes an index 0, the distance threshold is 50 meters. If the first information includes an index 1, the distance threshold is 100 meters.

**Table 1**

| Index | Candidate distance threshold |
|---|---|
| 0 | 50 meters |
| 1 | 100 meters |

It should be understood that, when the first information is used to determine, in the manner a1, whether the terminal is located within the first area, the first information is also used to determine whether the distance between the first location and the second location is less than the distance threshold. In this way, S703 may be replaced with the following: After the terminal enters the coverage area of the second satellite, if the distance between the first location and the second location is less than the distance threshold, the terminal sends the RRC request to the second satellite through the uplink resource configured by the resource configuration information; and step A1 below may be replaced with the following: After the terminal enters the coverage area of the second satellite, if the distance between the first location and the second location is greater than or equal to the distance threshold, the terminal sends a random access signal to the second satellite.

In some possible manners, in the manner a1, "less than" may be replaced with "less than or equal to", and/or "greater than or equal to" may be replaced with "greater than".

In the manner a1, the first information may indicate the distance threshold. In this way, the terminal can quickly and accurately determine, based on the first information, whether the terminal is located within the first area. In addition, in this manner, the first information only needs to indicate the distance threshold, and overheads are low.

### Manner a2:

The first information indicates the first area. In this way, the terminal may determine, based on the first information, whether the terminal is located within the first area. In some examples, the first information may directly indicate the first area. For example, the first information includes a coordinate range of the first area. In some other examples, the first information may include information that has a correspondence with the first area. For example, the first information indicates an administrative region corresponding to the first area, for example, a town A, and the first area is an area of the administrative region.

In the manner a2, the first information may indicate the first area. In this way, the terminal can quickly and accurately determine, based on the first information, whether the terminal is located within the first area.

In some possible manners, the method shown in FIG. 7 further includes step A1.

**Step A1**: After the terminal enters the coverage area of the second satellite, if the terminal is located outside the first area, the terminal sends the random access signal to the second satellite; and correspondingly, the second satellite receives the random access signal from the terminal. In other words, after the terminal enters the coverage area of the second satellite, if the terminal is located outside the first area, the terminal may initiate random access. The random access may be contention-based random access, or may be contention-free random access.

In this manner, after the terminal enters the coverage area of the second satellite, the terminal may determine, based on the location change of the terminal, whether to send the RRC request to the second satellite through the uplink resource configured by the resource configuration information. When the terminal is located outside the first area, the terminal cannot send the RRC request to the second satellite through the uplink resource configured by the resource configuration information, and may directly send the random access signal to the second satellite, thereby avoiding or reducing an access failure caused by movement of the terminal, shortening a communication delay of the terminal during cross-satellite access, and improving access efficiency.

In some possible manners, in step A1, the terminal may send the random access signal to the second satellite at a first time instant; and correspondingly, the second satellite receives the random access signal sent by the terminal at the first time instant. The first time instant may be determined based on an identifier of the terminal and a time-frequency resource allocated by the second satellite for a preamble. In this way, the terminal may determine the first time instant based on the identifier of the terminal and the time-frequency resource allocated by the second satellite for the preamble.

There are a plurality of manners in which the terminal obtains the time-frequency resource allocated by the second satellite for the preamble. The following uses an example for description. In some examples, after the terminal enters the coverage area of the second satellite, the terminal may obtain, from the second satellite, the time-frequency resource allocated by the second satellite for the preamble. In some other examples, when the terminal is located within the coverage area of the first satellite, the second satellite may send, to the terminal through the first satellite, the time-frequency resource allocated by the second satellite for the preamble.

The identifier of the terminal has a plurality of representation forms. For example, the identifier of the terminal is related to a 5G S-temporary mobile subscription identifier (5G S-temporary mobile subscription identifier, 5G-S-TMSI) of the terminal. For example, if the terminal is configured as extended discontinuous reception (extended discontinuous reception, eDRX), the identifier of the terminal is 5G-S-TMSI mod 4096; and if the terminal is not configured as the eDRX, the identifier of the terminal is 5G-S-TMSI mod 1024. mod is a modulo operation.

Because the first time instant is related to the identifier of the terminal, and identifiers of different terminals are different, first time instants determined by the different terminals may also be different, thereby avoiding or relieving network congestion caused by simultaneous random access of a large quantity of terminals, and improving access efficiency.

In some implementations, the first time instant may be determined based on the identifier of the terminal, second information, and the time-frequency resource allocated by the second satellite for the preamble. In this way, the terminal may determine the first time instant based on the identifier of the terminal, the second information, and the time-frequency resource allocated by the second satellite for the preamble. The second information includes at least one of the following.
1. A quantity of terminal groups: This may represent a quantity of terminal groups that are located within the coverage area of the second satellite.
2. First duration: This may be related to a synchronization signal and physical broadcast channel (physical broadcast channel, PBCH) block (synchronization signal and PBCH block, SSB) period. For example, the first duration is the SSB period or an integer multiple of the SSB period. The first duration may also have another name, for example, delayed access period duration.
3. A coefficient related to the first duration: For example, the coefficient may be 1, 2, 4, 8, or 16. The coefficient related to the first duration may also have another name, for example, a delayed access timer.

The following first describes a manner in which the terminal obtains the second information. The terminal may obtain the second information in a plurality of manners, for example, a manner b1 or a manner b2.

**Manner b1**: The terminal may receive the second information.

In some examples, the first satellite may send the second information to the terminal; and correspondingly, the terminal may receive the second information from the first satellite. The second information may be configured by the first satellite, or may be configured by the second satellite and then notified to the first satellite. Optionally, in this example, the second information may be sent by the first satellite to the terminal when the terminal is about to leave the coverage area of the first satellite. In this example, the second information and one or more of the resource configuration information and the first information may be carried in a same message, or may be carried in different messages.

In some other examples, the second satellite may send the second information to the terminal; and correspondingly, the terminal may receive the second information from the second satellite. The second information may be configured by the second satellite. Optionally, in this example, the second information may be sent by the second satellite to the terminal after the terminal enters the coverage area of the second satellite. For example, the second information is broadcast by the second satellite. In this way, after the terminal enters the coverage area of the second satellite, the terminal may receive the second information.

The second information may be carried in a conventional message, or may be carried in a new message. This is not limited in this application.

In this manner, the terminal can quickly and accurately obtain the second information. In addition, because the second information is received by the terminal in real time, a network side may configure appropriate second information for the terminal, thereby improving configuration flexibility.

**Manner b2**: The second information is preconfigured, for example, is specified in a protocol.

Optionally, when the second information includes a plurality of pieces of information, the terminal may obtain all of the second information in the manner b1 or the manner b2; or the terminal obtains a part of the second information in the manner b1, and obtains another part of the second information in the manner b2. For example, the second information includes the first duration and the coefficient related to the first duration. The terminal may obtain the first duration and the coefficient related to the first duration in the manner b1; or the terminal obtains the first duration and the coefficient related to the first duration in the manner b2; or the terminal obtains the coefficient related to the first duration in the manner b1 and obtains the first duration in the manner b2.

The following describes a case in which the first time instant may be determined based on the identifier of the terminal, the second information, and the time-frequency resource allocated by the second satellite for the preamble. There are a plurality of manners in which the first time instant is determined based on the identifier of the terminal, the second information, and the time-frequency resource allocated by the second satellite for the preamble, for example, a manner c1 or a manner c2.

**Manner c1**: A time interval between the first time instant and a second time instant satisfies a formula (1). In this way, the terminal may determine the first time instant according to the formula (1). $\left(UE_ID mod N\right) ∗ \left(delayTimer∗{T}_{delay}\right)$

UE_ID is the identifier of the terminal, N is the quantity of terminal groups, T_{delay} is the first duration, delayTimer is the coefficient related to the first duration, and the second time instant is a time instant that is determined based on the time-frequency resource allocated by the second satellite for the preamble and at which the terminal sends the random access signal. In other words, the terminal may send the random access signal in advance or after duration 4, where the duration 4 is the time interval.

In this manner, terminals may be grouped into N terminal groups based on identifiers of the terminals. Terminals in different terminal groups send random access signals at different time instants, thereby avoiding or relieving network congestion caused by simultaneous random access of a large quantity of terminals, and improving access efficiency. For example, if the UE_ID is 3, N is 2, T_{delay} is the same as the SSB period, that is, 20 milliseconds (ms), and the delayTimer is 4, the terminal may send the random access signal after a delay of (UE_ID mod N)*(delayTimer*T_{delay})=80 ms, that is, the terminal performs access after the delay of 80 ms. If the UE_ID is 4, N is 2, T_{delay} is 20 ms, and the delayTimer is 4, the terminal may send the random access signal after a delay of (UE_ID mod N)*(delayTimer*T_{delay})=0 ms. In this way, terminals with odd identifiers are grouped into one terminal group, and terminals with even identifiers are grouped into another terminal group. Terminals in different terminal groups send random access signals at different time instants.

Optionally, in a same terminal group, a same coefficient related to the first duration may be configured for different terminals, or different coefficients related to the first duration may be configured for different terminals. When different coefficients related to the first duration are configured for different terminals in a same terminal group, the different terminals in the same terminal group send random access signals at different time instants, thereby further avoiding or relieving network congestion caused by simultaneous random access of a large quantity of terminals, and improving access efficiency. For example, if the UE_ID is 3, N is 2, *T_{delay}* is 20 ms, and the delayTimer is 4, the terminal may send the random access signal after a delay of (UE_ID mod N)*(delayTimer**T_{delay}*)=80 ms, that is, the terminal performs access after the delay of 80 ms. If the UE_ID is 5, N is 2, *T_{delay}* is 20 ms, and the delayTimer is 8, the terminal may send the random access signal after a delay of (UE_ID mod N)*(delayTimer**T_{delay}*)=160 ms. In this way, terminals with odd identifiers are grouped into one terminal group, and different terminals in the terminal group send random access signals at different time instants.

**Manner c2**: A time interval between the first time instant and a second time instant may satisfy a formula (2). In this way, the terminal may determine the first time instant according to the formula (2). $\left(UE_ID mod N\right) ∗ {T}_{delay}$

For meanings of the second time instant and the parameters in the formula (2), refer to the manner c1. Details are not described herein again.

In this manner, terminals may be grouped into N terminal groups based on identifiers of the terminals. Terminals in different terminal groups send random access signals at different time instants, thereby avoiding or relieving network congestion caused by simultaneous random access of a large quantity of terminals, and improving access efficiency. For example, if the UE_ID is 3, N is 2, and T_{delay} is 20 ms, the terminal may send the random access signal after a delay of (UE_ID mod N)* T_{delay}=20 ms, that is, the terminal performs access after the delay of 20 ms. If the UE_ID is 4, N is 2, and T_{delay} is 20 ms, the terminal may send the random access signal after a delay of (UE_ID mod N)* T_{delay}=0 ms. In this way, terminals with odd identifiers are grouped into one terminal group, and terminals with even identifiers are grouped into another terminal group. Terminals in different terminal groups send random access signals at different time instants.

An embodiment of this application provides another communication method. FIG. 8 is a schematic flowchart corresponding to a communication method according to an embodiment of this application. As shown in FIG. 8, the method includes the following steps.

**S801**: A terminal generates a random access signal.

Optionally, after the terminal enters a coverage area of a second satellite, if the terminal has a network access requirement, the terminal may generate the random access signal. The random access signal may be a random access signal in contention-based random access, or may be a random access signal in contention-free random access.

**S802**: After the terminal enters the coverage area of the second satellite, the terminal sends the random access signal to the second satellite at a first time instant; and correspondingly, the second satellite receives the random access signal sent by the terminal at the first time instant. The first time instant is determined based on an identifier of the terminal and a time-frequency resource allocated by the second satellite for a preamble.

For specific content in which the terminal sends the random access signal to the second satellite at the first time instant, refer to the descriptions that the terminal may send the random access signal to the second satellite at the first time instant in step A1. For specific content of the first time instant, refer to the descriptions of the first time instant in step A1. Details are not described herein again.

According to the method shown in FIG. 8, after the terminal enters the coverage area of the second satellite, the terminal may send the random access signal to the second satellite at the first time instant. Because the first time instant is related to the identifier of the terminal, and identifiers of different terminals are different, first time instants determined by the different terminals may also be different, thereby avoiding or relieving network congestion caused by simultaneous random access of a large quantity of terminals, and improving access efficiency.

Based on a same technical concept as the foregoing method embodiments, an embodiment of this application provides a corresponding communication apparatus, which may be configured to perform functions of related steps in the foregoing method embodiments. The function may be implemented by hardware, may be implemented by software, or may be implemented by hardware executing corresponding software. The hardware or the software includes one or more modules corresponding to the foregoing functions. The communication apparatus may be a terminal, or may be a module (for example, a circuit or a chip) in the terminal, or may be a logical node, a logical module, or software that can implement all or a part of functions of the terminal; or the communication apparatus may be a satellite or a module (for example, a circuit or a chip) in the satellite, or may be a logical node, a logical module, or software that can implement all or a part of functions of the satellite.

In a possible implementation, a structure of the communication apparatus according to this embodiment of this application is shown in FIG. 9, and the communication apparatus includes an interface unit 901 and a processing unit 902. The following describes functions of the units in the communication apparatus 900.

The interface unit 901 is configured to input and/or output information. Inputting information may be replaced with receiving information, and outputting information may be replaced with sending information. When outputting information, the interface unit 901 may output the information to an apparatus other than the communication apparatus 900, or may output the information to another unit in the communication apparatus 900. In some manners, the interface unit 901 may be implemented through at least one of a physical interface, a communication module, a communication interface, and an input/output interface. In some other manners, the interface unit 901 may be implemented through an interface circuit, for example, a mobile communication module. The mobile communication module may include one or more of at least one antenna, at least one filter, a switch, a power amplifier, a low noise amplifier (low noise amplifier, LNA), and the like.

The processing unit 902 may be configured to support the communication apparatus 900 in performing processing actions in the foregoing method embodiments. The processing unit 902 may be implemented through one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

In an implementation, the communication apparatus 900 is used in the terminal in the embodiment of this application shown in FIG. 7. The following describes a specific function of the processing unit 902 in this implementation.

The processing unit 902 is configured to: receive resource configuration information from a first satellite through the interface unit 901, where the resource configuration information is used to configure an uplink resource; receive first information from the first satellite through the interface unit 901, where the first information is used to determine whether the terminal is located within a first area; and after the terminal enters a coverage area of a second satellite, send an RRC request to the second satellite through the interface unit 901 through the uplink resource if it is determined, based on the first information, that the terminal is located within the first area.

In some possible manners, the processing unit 902 is further configured to: after the terminal enters the coverage area of the second satellite, send a random access signal to the second satellite through the interface unit 901 if it is determined, based on the first information, that the terminal is located outside the first area.

For example, the processing unit 902 is specifically configured to send the random access signal to the second satellite at a first time instant through the interface unit 901, where the first time instant is determined based on an identifier of the terminal and a time-frequency resource allocated by the second satellite for a preamble.

Optionally, the processing unit 902 is further configured to receive second information from the first satellite or the second satellite through the interface unit 901.

In another implementation, the communication apparatus 900 is used in the first satellite in the embodiment of this application shown in FIG. 7. The following describes a specific function of the processing unit 902 in this implementation.

The processing unit 902 is configured to: send resource configuration information to a terminal through the interface unit 901, where the resource configuration information is used to configure an uplink resource; and send first information to the terminal through the interface unit 901, so that the terminal, after entering a coverage area of the second satellite and determining, based on the first information, it is located within the first area, sends an RRC request to a second satellite based on the uplink resource.

In some possible manners, the processing unit 902 is further configured to: send second information to the terminal through the interface unit 901, where the second information, an identifier of the terminal, and a time-frequency resource allocated by the second satellite for a preamble are used to determine a first time instant, the first time instant is a time instant at which the terminal sends a random access signal to the second satellite, the random access signal is sent when the terminal is located outside the first area after the terminal enters the coverage area of the second satellite, and the second information includes at least one of the following: a quantity of terminal groups, a first duration, or a coefficient related to the first duration.

In still another implementation, the communication apparatus 900 is used in the terminal in the embodiment of this application shown in FIG. 8. The following describes a specific function of the processing unit 902 in this implementation.

The processing unit 902 is configured to: generate a random access signal; and send the random access signal to a second satellite at a first time instant through the interface unit 901 after the terminal enters a coverage area of the second satellite, where the first time instant is determined based on an identifier of the terminal and a time-frequency resource allocated by the second satellite for a preamble.

In some possible manners, the processing unit 902 is further configured to receive second information through the interface unit 901.

In yet another implementation, the communication apparatus 900 is used in the second satellite in the embodiment of this application shown in FIG. 8. The following describes a specific function of the processing unit 902 in this implementation.

The processing unit 902 is configured to receive a random access signal sent by a terminal at a first time instant through the interface unit 901, where the first time instant is determined based on an identifier of the terminal and a time-frequency resource allocated by a second satellite for a preamble.

In some possible manners, the processing unit 902 is further configured to send second information to the terminal through the interface unit 901.

For more detailed descriptions of the processing unit 902 and the interface unit 901, refer to related descriptions in the method embodiments shown in FIG. 7 and FIG. 8. Details are not described herein again.

It should be noted that, in the foregoing embodiments of this application, division into the modules is an example, and is merely logical function division. In an actual implementation, another division manner may be used. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, or a network device) or a processor (processor) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

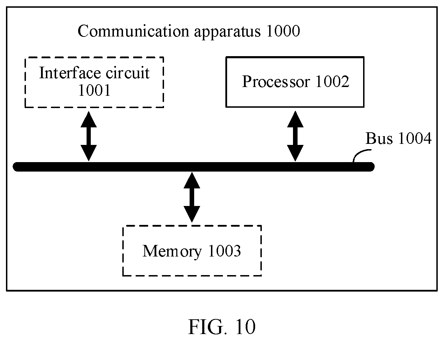

In a possible implementation, for a communication apparatus according to an embodiment of this application, refer to FIG. 10. The communication apparatus 1000 includes a processor 1002. Optionally, the communication apparatus 1000 further includes an interface circuit 1001 and a memory 1003. The interface circuit 1001, the processor 1002, and the memory 1003 are coupled to each other.

Optionally, the interface circuit 1001, the processor 1002, and the memory 1003 are coupled to each other through a bus 1004. The bus 1004 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented through only one bold line in FIG. 10. However, it does not indicate that there is only one bus or only one type of bus.

The interface circuit 1001 is configured to input and/or output information. Inputting information may be replaced with receiving information, and outputting information may be replaced with sending information. When outputting information, the interface circuit 1001 may output the information to an apparatus other than the communication apparatus 1000, or may output the information to another unit in the communication apparatus 1000. For example, the interface circuit 1001 may be implemented through at least one of a physical interface, a communication module, a communication interface, an input/output interface, and a mobile communication module. The mobile communication module may include one or more of at least one antenna, at least one filter, a switch, a power amplifier, an LNA, and the like.

The processor 1002 may be configured to support the communication apparatus 1000 in performing processing actions in the foregoing method embodiments. When the communication apparatus 1000 is configured to implement the foregoing method embodiments, the processor 1002 may be further configured to implement a function of the foregoing processing unit 902. The processor 1002 may be a CPU, or may be another general-purpose processor, a DSP, an ASIC, an FPGA or another programmable logic device, a transistor logic device, a hardware component, or any combination thereof. The general-purpose processor may be a microprocessor or any regular processor.

In an implementation, the communication apparatus 1000 is used in the terminal in the embodiment of this application shown in FIG. 7. The following describes a specific function of the processor 1002 in this implementation.

The processor 1002 is configured to: receive resource configuration information from a first satellite through the interface circuit 1001, where the resource configuration information is used to configure an uplink resource; receive first information from the first satellite through the interface circuit 1001, where the first information is used to determine whether the terminal is located within a first area; and after the terminal enters a coverage area of a second satellite, send an RRC request to the second satellite through the interface circuit 1001 through the uplink resource if it is determined, based on the first information, that the terminal is located within the first area.

In another implementation, the communication apparatus 1000 is used in the first satellite in the embodiment of this application shown in FIG. 7. The following describes a specific function of the processor 1002 in this implementation.

The processor 1002 is configured to: send resource configuration information to a terminal through the interface circuit 1001, where the resource configuration information is used to configure an uplink resource; and send first information to the terminal through the interface circuit 1001, so that the terminal, after entering a coverage area of the second satellite and determining, based on the first information, it is located within the first area, sends an RRC request to a second satellite based on the uplink resource.

In still another implementation, the communication apparatus 1000 is used in the terminal in the embodiment of this application shown in FIG. 8. The following describes a specific function of the processor 1002 in this implementation.

The processor 1002 is configured to: generate a random access signal; and send the random access signal to a second satellite at a first time instant through the interface circuit 1001 after the terminal enters a coverage area of the second satellite, where the first time instant is determined based on an identifier of the terminal and a time-frequency resource allocated by the second satellite for a preamble.

In yet another implementation, the communication apparatus 1000 is used in the second satellite in the embodiment of this application shown in FIG. 8. The following describes a specific function of the processor 1002 in this implementation.

The processor 1002 is configured to receive a random access signal sent by a terminal at a first time instant through the interface circuit 1001, where the first time instant is determined based on an identifier of the terminal and a time-frequency resource allocated by a second satellite for a preamble.

For a specific function of the processor 1002, refer to the descriptions in the communication method according to the foregoing embodiments and examples of this application, and the descriptions of the specific functions of the communication apparatus 900 in the embodiment of this application shown in FIG. 9. Details are not described herein again.

The memory 1003 is configured to store program instructions, data, and/or the like. Specifically, the program instructions may include program code. The program code includes computer operation instructions. The memory 1003 may include a RAM, and may further include a non-volatile memory (non-volatile memory), for example, at least one magnetic disk memory. The processor 1002 executes the program instructions stored in the memory 1003, and implements the foregoing functions through the data stored in the memory 1003, to implement the communication methods according to the foregoing embodiments of this application. The memory 1003 may be integrated with the processor 1002, or may be a memory outside the communication apparatus.

It may be understood that the memory 1003 in FIG. 10 in this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, used as an external cache. Through an example description rather than a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and the methods described in this specification includes but is not limited to these memories and any memory of another appropriate type.

Based on the foregoing embodiments, an embodiment of this application further provides a computer program product including computer-executable instructions. When the computer program product is run, the methods according to the foregoing embodiments are performed.

Based on the foregoing embodiments, an embodiment of this application further provides a computer-readable storage medium. The computer-readable storage medium stores a computer program. When the computer program is executed by a computer, the computer is caused to perform the methods according to the foregoing embodiments.

The storage medium may be any usable medium that can be accessed by the computer. The following provides an example but does not impose a limitation: The computer-readable medium may include a RAM, a ROM, an EEPROM, a CD-ROM or another compact disc storage medium, a magnetic disk storage medium or another magnetic storage device, or any other medium that can be configured to carry or store expected program code in a form of instructions or a data structure and that can be accessed by the computer.

Based on the foregoing embodiments, an embodiment of this application further provides a chip. The chip is configured to read a computer program stored in a memory, to implement the methods according to the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions between different embodiments are consistent and may be mutually referenced, and technical features in different embodiments may be combined based on an internal logical relationship thereof to form a new embodiment.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device to generate computerimplemented processing. Therefore, the instructions executed on the computer or the another programmable device provide steps for implementing a specific function in one or more procedures in the flowcharts and/or in one or more blocks in the block diagrams.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Apparently, a person skilled in the art may make various modifications and variations to this application without departing from the scope of this application. In this case, this application is also intended to cover these modifications and variations of this application provided that such modifications and variations fall within the scope of protection defined by the claims of this application and equivalent technologies thereof.

## Claims

1. A communication method, applied to a terminal, and comprising:
receiving resource configuration information from a first satellite, wherein the resource configuration information is used to configure an uplink resource;
receiving first information from the first satellite, wherein the first information is used to determine whether the terminal is located within a first area; and
after the terminal enters a coverage area of a second satellite, sending a radio resource control RRC request to the second satellite through the uplink resource if it is determined, based on the first information, that the terminal is located within the first area.

2. The method according to claim 1, wherein that the first information is used to determine whether the terminal is located within the first area comprises:
the first information indicates a distance threshold, wherein if a distance between a first location and a second location is less than the distance threshold, the terminal is located within the first area; and/or if the distance between the first location and the second location is greater than or equal to the distance threshold, the terminal is located outside the first area; and
the first location is a location of the terminal when leaving a coverage area of the first satellite, and the second location is a location of the terminal when entering the coverage area of the second satellite.

3. The method according to claim 1 or 2, further comprising:
after the terminal enters the coverage area of the second satellite, sending a random access signal to the second satellite if it is determined, based on the first information, that the terminal is located outside the first area.

4. The method according to claim 3, wherein the sending the random access signal to the second satellite comprises:
sending the random access signal to the second satellite at a first time instant, wherein the first time instant is determined based on an identifier of the terminal and a time-frequency resource allocated by the second satellite for a preamble.

5. The method according to claim 4, wherein that the first time instant is determined based on the identifier of the terminal and the time-frequency resource allocated by the second satellite for the preamble comprises:
the first time instant is determined based on the identifier of the terminal, second information, and the time-frequency resource allocated by the second satellite for the preamble, wherein the second information comprises at least one of the following: a quantity of terminal groups, a first duration, or a coefficient related to the first duration.

6. The method according to claim 5, further comprising:
receiving the second information from the first satellite or from the second satellite.

7. The method according to claim 5 or 6, wherein a time interval between the first time instant and a second time instant satisfies the following formula: $\left(UE_ID mod N\right) ∗ \left(delayTimer∗{T}_{delay}\right)$ wherein UE_ID is the identifier of the terminal, N is the quantity of terminal groups, mod represents a modulo operation, T_{delay} is the first duration, delayTimer is the coefficient related to the first duration, and the second time instant is a time instant that is determined based on the time-frequency resource allocated by the second satellite for the preamble and at which the terminal sends the random access signal.

8. A communication method, applied to a first satellite, and comprising:
sending resource configuration information to a terminal, wherein the resource configuration information is used to configure an uplink resource; and
sending first information to the terminal, so that the terminal, after entering a coverage area of the second satellite and determining, based on the first information, it is located within the first area, sends a radio resource control RRC request to a second satellite based on the uplink resource..

9. The method according to claim 8, wherein the first information specifically indicates a distance threshold, wherein if a distance between a first location and a second location is less than the distance threshold, the terminal is located within the first area; and/or if the distance between the first location and the second location is greater than or equal to the distance threshold, the terminal is located outside the first area; and
the first location is a location of the terminal when leaving a coverage area of the first satellite, and the second location is a location of the terminal when entering the coverage area of the second satellite.

10. The method according to claim 8 or 9, further comprising:
sending second information to the terminal, wherein the second information, an identifier of the terminal, and a time-frequency resource allocated by the second satellite for a preamble are used to determine a first time instant, the first time instant is a time instant at which the terminal sends a random access signal to the second satellite, the random access signal is sent when the terminal is located outside the first area after the terminal enters the coverage area of the second satellite, and the second information comprises at least one of the following: a quantity of terminal groups, a first duration, or a coefficient related to the first duration.

11. The method according to claim 10, wherein a time interval between the first time instant and a second time instant satisfies the following formula: $\left(UE_ID mod N\right) ∗ \left(delayTimer∗{T}_{delay}\right)$ wherein UE_ID is the identifier of the terminal, N is the quantity of terminal groups, mod represents a modulo operation, T_{delay} is the first duration, delayTimer is the coefficient related to the first duration, and the second time instant is a time instant that is determined based on the time-frequency resource allocated by the second satellite for the preamble and at which the terminal sends the random access signal.

12. A communication apparatus, comprising:
an interface unit, configured to receive and send information; and
a processing unit, configured to perform the method according to any one of claims 1 to 11 through the interface unit.

13. A communication apparatus, comprising a processor, wherein the processor is configured to perform the method according to any one of claims 1 to 11.

14. A computer-readable storage medium, wherein the computer-readable storage medium stores a computer program or instructions, and when the computer program or the instructions are executed by a communication apparatus, the method according to any one of claims 1 to 11 is implemented.

15. A computer program product, wherein the computer program product comprises computer program code, and when the computer program code is run, the method according to any one of claims 1 to 11 is implemented.
